# EUROPÄISCHE PATENTSCHRIFT

(11) **EP 1 682 603 B1**
(45) Veröffentlichungstag und Bekanntmachung des Hinweises auf die Patenterteilung: **21.02.2007**
(21) Anmeldenummer: 04791091.4
(22) Anmeldetag: 30.10.2004
(51) Int. Cl.: C08G 65/00

(54) **VERFAHREN ZUR ANIONISCHEN POLYMERISATION VON OXIRANEN**
METHOD FOR THE ANIONIC POLYMERISATION OF OXIRANS
PROCEDE DE POLYMERISATION ANIONIQUE D'OXYRANES

(30) Priorität: 04.11.2003 DE 10352105
(43) Veröffentlichungstag der Anmeldung: 26.07.2006
(73) Patentinhaber: BASF Aktiengesellschaft, 67056 Ludwigshafen (DE)
(72) Erfinder: DESBOIS, Philippe, 67487 Maikammer (DE); DEFFIEUX, Alain, F-33000 Bordeaux (FR); CARLOTTI, Stéphane, F-33600 Pessac (FR); BILLOUARD, Cyrille, 68169 Mannheim (DE)
(86) Internationale Anmeldenummer: PCT/EP2004/012338
(87) Internationale Veröffentlichungsnummer: WO 2005/044896

(56) Entgegenhaltungen:
- PATENT ABSTRACTS OF JAPAN Bd. 2000, Nr. 03, 30. März 2000 (2000-03-30) & JP 11 335459 A (KAGAKU GIJUTSU SENRYAKU SUISHIN KIKO), 7. Dezember 1999 (1999-12-07)
- W. BRAUNE, J. OKUDA: "An Efficient Method for Controlled Propylene Oxide Polymerization: The Significance of Bimetallic Activation in Aluminum Lewis Acids" ANGEW. CHEM. INT. ED., Bd. 42, Nr. 1, 3. Januar 2003 (2003-01-03), Seiten 64-68, XP002321170
- PATENT ABSTRACTS OF JAPAN Bd. 2002, Nr. 09, 4. September 2002 (2002-09-04) & JP 2002 128886 A (ASAHI DENKA KOGYO KK), 9. Mai 2002 (2002-05-09)

## Beschreibung

Die Erfindung betrifft ein Verfahren zur Herstellung von Homopolymeren aus Oxiranen, oder von Copolymeren aus Oxiranen und Comonomeren, durch anionische Polymerisation, dadurch gekennzeichnet, dass man in Gegenwart einer quartären Ammonium- und/oder Phosphoniumverbindung und eines einkernigen Aluminiumorganyls polymerisiert.

Unter Oxiranen sollen Epoxide einfacher Struktur verstanden werden, beispielsweise Ethylenoxid (EO), auch als Oxiran bezeichnet, und Propylenoxid (PO) auch als Methyloxiran bezeichnet. Siehe auch CD Römpp Chemie Lexikon, Version 1.0, Thieme Verlag Stuttgart, 1995 (nachfolgend als Römpp zitiert), Stichwort "Oxirane". Als Oxiran-Polymere sind insbesondere Polyethylenoxid (PEO) und Polypropylenoxid (PPO) zu nennen.

PO- und EO-Polymere können u.a. auch durch anionische Polymerisation hergestellt werden. Dazu geeignete Initiatorsysteme enthalten beispielsweise Aluminiumporphyrine als Initiator und voluminöse Lewis-Säuren wie Isobutylaluminium-bis(2,6-di-tert-butyl-4-methylphenolat) (= iBu-Al-(BHT)₂, BHT = Butylhydroxytoluol) als Coinitiator. Jedoch sind die erhaltenen Polymere aufgrund geringer Molekulargewichte, ausgeprägter Eigenfarbe und des teuren Initiatorsystems nicht marktfähig.

Homopolymerisationen von PO mit alternativen Initiatorsystemen werden in folgenden Schriften beschrieben:

Ding et al. lehren in Eur. Pol. J. 1991, 27, 891-894 und Eur. Pol. J, 1991, 27, 895-899 die anionische Polymerisation von PO mittels 1-Methoxy-2-propanol-Kaliumsalz und einem Kronenether wie 18-Krone-6. Die erhaltenen PO-Homopolymere hatten zahlenmittlere Molekulargewichte von ca. 3000 bis 13000.

Die JP-A 2000/086755 offenbart eine Initiatorzusammensetzung aus einem Alkalimetallalkoxid (z.B. Kalium-tert-butanolat) oder einem Alkalimetallhydroxid, einer organischen Lewis-Säure, z.B. CH₃-Al-(BHT)₂, und einem Kronenether, z.B. 18-Krone-6. Bei 48 Stunden Reaktionszeit betragen die zahlenmittleren Molekulargewichte (Mn) des PPO maximal etwa 8000.

Die JP-A 2000/256457 lehrt eine ähnliche Initiatorzusammensetzung aus einem Alkalimetallalkoxid bzw. -hydroxid, einem Kronenether, und speziellen organischen Lewis-Säuren, die direkte Metall-Kohlenstoff-Bindungen ohne Sauerstoffbrücken aufweisen. Die zahlenmittleren Molekulargewichte des PPO liegen nach 5 bis 25 Stunden Reaktionszeit bei maximal etwa 10000.

In der JP-A 2002/128886 wird eine ähnliche Initiatorzusammensetzung aus einem Alkalimetallalkoxid oder -hydroxid, einem Kronenether, einer Trialkylaluminiumverbindung und einem Polyetherpolyol offenbart. Nach 3 bzw. 6 Tagen Polymerisationszeit betragen die zahlenmittleren Molekulargewichte des PPO ca. 25000 bzw. ca. 18000.

Verwendet man neben dem Oxiran ein weiteres, anionisch polymerisierbares Monomer wie z.B. Styrol, so lassen sich auch Oxiran-Copolymere herstellen, insbesondere Blockcopolymere. Quirk et al. beschreiben in Macromol. Chem. Phys. 2000, 201, 1395-1404 auf S. 1396-1397 die Herstellung von Polystyrol-PO-Blockcopolymeren, wobei zunächst Styrol mittels sec-Butyllithium anionisch polymerisiert wird. Der Polystyrolblock wird danach mit EO funktionalisiert, und schließlich aus PO in Gegenwart von Kalium-tert-amylat und Dimethylsulfoxid (DMSO) ein PPO-Block anpolymerisiert. Die Reaktionszeit beträgt 7 Tage und das zahlenmittlere Molekulargewicht des Blockcopolymeren etwa 5000.

Quirk et al. lehren in Polym. Int. 1996, 39, 3-10 die Herstellung von Polystyrol-EO-Blockcopolymeren nach einem ähnlichen Verfahren, wobei als Kaliumsalz Kalium-tert-butanolat, K-tert-amylat oder Kalium-di-tert-2,6-phenolat verwendet werden. Nach 1 bis 6 Tagen Reaktionszeit wurden Blockcopolymere mit zahlenmittleren Molekulargewichten von maximal 19000 erhalten.

Die beschriebenen Verfahren zur Herstellung von Homo- oder Copolymeren des PO bzw. EO weisen entweder sehr lange Polymerisationszeiten auf (mehrere Tage), und/oder die erhaltenen Molekulargewichte sind unbefriedigend gering. Aus diesen Gründen sind sie unwirtschaftlich.

Ihara et al. lehren in Macromolecules 2002, 35 Nr. 11, 4223-4225, dass sich zwar tert-Butylacrylat in Gegenwart eines Initiatorsystems aus Kalium-tert-butylat und Trialkylaluminiumverbindungen wie Triisobutylaluminium (TIBA), anionisch zum Homopolymer polymerisieren lässt, nicht jedoch n-Butylacrylat und Methylmethacrylat (MMA). Allerdings kann an einen Poly-tert-butylacrylat-Block ein Poly-MMA-Block anpolymerisiert werden. Oxirane als Monomere werden nicht erwähnt.

Braune und Okuda beschreiben in Angew. Chem. Int. Ed. 2003, 42 No. 1, 64-68 die Polymerisation von PO mit Mischungen spezieller Aluminiumkomplexe. In einer mehrstufigen Synthese werden zunächst zweikernige - d.h. zwei Al-Atome pro Molekül enthaltende - neutrale Aluminiumkomplexe [Al(L)Cl]₂ und [Al(L)OiPr]₂ hergestellt und isoliert. Diese zweikernigen Komplexe werden mit NEt₄-Cl oder NEt₄-OiPr zu anionischen Komplexen [NEt₄][Al(L)Cl₂] bzw. [NEt₄][Al(L)(OiPr)₂] umgesetzt, die ebenfalls isoliert werden. Dabei ist L gleich 2,2'-Methylenbis(6-tert-butyl-4-methylphenol) oder 2,2'-Methylenbis[4-methyl-6-(1-methylcyclohexyl)phenol], OiPr gleich Isopropanolat und Et gleich Ethyl. Es wird beschrieben, dass PO nur polymerisiert werden kann, wenn die neutralen (zweikemigen) und anionischen Komplexe zusammen verwendet werden. Die Herstellung und Isolierung der genannten Komplexverbindungen ist kompliziert und aufwändig, und nach 3 Stunden Reaktionszeit beträgt das zahlenmittlere Molekulargewicht des PPO nur etwa 1100 bis maximal 3600.

Die ältere, nicht vorveröffentlichte Anmeldung DE-Aktenzeichen 10323047.5 vom 20.05.03 offenbart ein Verfahren zur Herstellung von Oxiran-Homo- oder -copolymeren durch anionische Polymerisation mittels einer Alkalimetallverbindung und eines Aluminiumorganyls, jedoch ohne Kronenether oder Kryptanden.

Es bestand die Aufgabe, den geschilderten Nachteilen abzuhelfen. Insbesondere bestand die Aufgabe, ein alternatives Verfahren zur Polymerisation von Oxiranen bereitzustellen. Das Verfahren sollte gegenüber den bekannten Verfahren ökonomische Vorteile bieten.

Die Polymerisationszeiten sollten deutlich kürzer sein als bei den Verfahren des Standes der Technik, wobei eine maximale Polymerisationszeit von 48 Stunden angestrebt wurde. Dabei sollte die kürzere Dauer nicht zu Lasten des erzielten Molekulargewichts gehen. Weiterhin sollten sich mit dem Verfahren Polyoxirane mit höheren Molekulargewichten, verglichen mit dem Stand der Technik, erzielen lassen.

Außerdem bestand die Aufgabe, ein Verfahren bereitzustellen, mit dem sich sowohl Homopolymere als auch Copolymere herstellen lassen. Oxirane sind sehr reaktive Verbindungen, und das Verfahren sollte eine verbesserte Kontrolle und einfachere Steuerung der Oxiranpolymerisation ermöglichen.

Schließlich sollte das Verfahren weniger kompliziert sein als die Verfahren des Standes der Technik, insbesondere mit weniger Reagenzien auskommen. Insbesondere sollten die verwendeten Initiatoren, bzw. Initiatorsysteme und deren Komponenten, einfacher sein als diejenigen des Standes der Technik, und sich auf einfache Weise herstellen lassen.

Demgemäß wurde das eingangs definierte Verfahren gefunden, sowie die genannten Homo- und Copolymere, ihre genannte Verwendung, sowie die genannten Formkörper, Folien, Fasern und Schäume. Bevorzugte Ausführungsformen der Erfindung sind den Unteransprüchen zu entnehmen.

Bei dem erfindungsgemäßen Verfahren werden durch anionische Polymerisation Oxirane zu Homopolymeren, oder Oxirane und Comonomere zu Copolymeren, polymerisiert. Die Polymerisation erfolgt in Gegenwart einer quartären Ammonium- und/oder Phosphoniumverbindung und eines einkernigen Aluminiumorganyls der Formel R₃-Al.

Als Oxirane sind alle Epoxide einfacher Struktur (d.h. ohne kondensierte Ringsysteme) geeignet. Bevorzugt sind die Oxirane ausgewählt aus Propylenoxid (PO), Ethylenoxid (EO) oder deren Mischungen.

Verwendet man mehrere Oxirane gemeinsam, beispielsweise PO und EO, so erhält man PO-EO-Copolymere. Es wurde gefunden, dass PO/EO-Gemische in ähnlicher Weise polymerisieren wie reines PO. Aufgrund dieses ähnlichen Polymerisationsverhaltens kann man einen Teil des PO durch EO ersetzen, ohne die Polymerisationsbedingungen (Verfahrensparameter) wesentlich ändern zu müssen. Dies bringt wirtschaftliche Vorteile, da aufwändige Verfahrensanpassungen entfallen. Außerdem ist EO in der Regel preiswerter als PO.

Geeignete Gemische von PO und EO weisen üblicherweise einen EO-Anteil von 0,1 bis 99,9, insbesondere 10 bis 90 und besonders bevorzugt 20 bis 80 Gew.-% auf, bezogen auf das Gemisch.

Zur Herstellung der Copolymere kommen als Comonomere alle anionisch polymerisierbaren Monomere in Betracht, insbesondere Styrolmonomere und Dienmonomere. Als Styrolmonomere sind alle vinylaromatischen Monomere geeignet, beispielsweise Styrol, α-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Als Dienmonomere kommen alle polymerisierbaren Diene in Betracht, insbesondere 1,3-Butadien (kurz: Butadien), 1,3-Pentadien, 1,3-Hexadien, 2,3-Dimethylbutadien, Isopren, Piperylen oder Mischungen davon.

Bevorzugt sind die Comonomere ausgewählt aus Styrol, α-Methylstyrol, Butadien, Isopren oder deren Mischungen. Besonders bevorzugt ist Styrol.

Sofern Comonomere mitverwendet werden, d.h. sofern Copolymere hergestellt werden, beträgt der Anteil der Comonomeren 0,1 bis 99,9, bevorzugt 0,1 bis 80 und insbesondere 0,1 bis 50 Gew.-%, bezogen auf die Gesamtmonomerenmenge. Weitere Angaben zu den Copolymeren, insbesondere Blockcopolymeren, werden weiter unten gemacht.

Unter quartären Ammoniumverbindungen werden Ammoniumverbindungen verstanden, bei denen alle vier H-Atome des NH₄⁺-Ions durch organische Reste R ersetzt sind. Sie weisen bevorzugt die allgemeine Formel I

R¹R²R³R⁴N-X (I)

auf, wobei die Reste R¹, R², R³ und R⁴ gleich oder verschieden sein können. Formel I kann vereinfachend auch als Formel la

NR₄-X (la)

geschrieben werden. Es bedeuten
- R¹, R², R³, R⁴, bzw. R:: gleiche oder verschiedene Alkylreste, Arylreste oder Alkylarylreste mit 1 bis 20 C-Atomen, die unsubstituiert oder substituiert sein können, und die O, S, N, P, Si, Halogen oder andere Heteroatome enthalten können, und
- X:: ein anorganischer oder organischer Rest, beispielsweise eine anorganische Gruppierung wie Halogen, Cyanid, Hydroxid oder Hydrogencarbonat, oder eine organische Gruppierung wie Alkoholat (Alkoxid), Amin bzw. Alkylamin, oder Carbonsäurereste wie Formiat, Acetat oder Propionat.

Bevorzugt bedeuten R¹, R², R³ und R⁴, bzw. R, gleiches oder verschiedenes Alkyl mit 1 bis 10 C-Atomen, und X Halogen, OH oder ein Alkoholatrest mit 1 bis 10 C-Atomen. Besonders bevorzugt steht R für gleiche Reste, also R¹ = R² = R³ = R⁴. Besonders bevorzugt ist R gleich Ethyl (Et) oder n-Butyl (nBu), und X ist besonders bevorzugt Cl, OH, Acetat oder Isopropanolat (OiPr).

Besonders bevorzugte quartäre Ammoniumverbindungen sind Tetraethylammonium-isopropanolat NEt₄-OiPr, Tetra-n-butylammonium-isopropanolat NnBu₄-OiPr, Tetra-n-butylammonium-chlorid NnBu₄-Cl, Tetra-n-butylammonium-hydroxid NnBu₄-OH, und Tetra-n-butylammonium-acetat NnBu₄-OOC(CH₃).

Entsprechend werden unter Phoshoniumverbindungen Salze verstanden, bei denen alle vier H-Atome des PH₄⁺-Ions durch organische Reste R ersetzt sind. Sie weisen bevorzugt die allgemeine Formel I

R¹R²R³R⁴P-X (I)

auf, wobei die Reste R¹, R², R³ und R⁴ gleich oder verschieden sein können. Formel I kann vereinfachend auch als Formel Ib

PR₄-X (Ib)

geschrieben werden. R¹ bis R⁴ sind wie bei den Ammoniumverbindungen Ia definiert.

Besonders bevorzugte quartäre Phosphoniumverbindungen sind Tetraethylphosphonium-isopropanolat PEt₄-OiPr, Tetra-n-butylphosphonium-isopropanolat PnBu₄-OiPr, Tetra-n-butylphosphonium-chlorid PnBu₄-Cl, Tetra-n-butylphosphonium-hydroxid PnBu₄-OH, und Tetra-n-butylphosphonium-acetat PnBu₄-OOC(CH₃).

Die quartären Ammonium- und Phosphoniumverbindungen sind im Handel erhältlich, oder können auf einfache, an sich bekannte Weise hergestellt werden. So lassen sich beispielsweise die Isopropanolate aus den entsprechenden handelsüblichen Halogeniden durch Umsetzung mit Isopropanol herstellen.

Die benötigte Menge an quartärer Ammonium- und/oder Phosphoniumverbindung richtet sich u.a. nach dem gewünschten Molekulargewicht (Molmasse) des Polymeren, das hergestellt werden soll, nach Art und Menge des verwendeten Aluminiumorganyls und ggf. Coinitiators (siehe unten) und nach der Polymerisationstemperatur. In der Regel verwendet man 0,001 bis 10, bevorzugt 0,01 bis 1 und besonders bevorzugt 0,02 bis 0,2 Mol-% quartäre Ammonium- und/oder Phosphoniumverbindung, bezogen auf die Gesamtmenge der eingesetzten Monomeren.

Bezüglich der Aluminiumorganyle besteht die Vorstellung, dass sie als Aktivator für das Monomer Oxiran wirken. Das Aluminiumorganyl tritt möglicherweise in Wechselwirkung mit dessen Epoxidgruppe, öffnet den Epoxidring und ermöglicht auf diese Weise die Polymerisation des Oxirans. Dieser angenommene Mechanismus unterscheidet sich grundlegend von dem der anionischen Polymerisation von Styrol oder Butadien, bei der das Aluminiumorganyl als sog. "Retarder" die Polymerisationsgeschwindigkeit verringert.

Als Organyle werden die metallorganischen Verbindungen eines Metalls mit mindestens einer Metall-Kohlenstoff σ-Bindung verstanden, insbesondere die Alkyl- oder Arylverbindungen. Daneben können die Metallorganyle noch Wasserstoff und Halogen am Metall enthalten.

Erfindungsgemäß werden einkernige Aluminiumorganyle verwendet, also solche, die pro Molekül (Formeleinheit) ein Aluminiumatom enthalten, im Unterschied zu mehrkernigen Organylen, die zwei oder mehr Aluminiumatome im Molekül aufweisen. Nicht erfindungsgemäße, zweikernige Aluminiumorganyle werden beispielsweise im genannten Stand der Technik von Braune und Okuda verwendet.

Als Aluminiumorganyle werden solche der Formel R₃-Al verwendet , wobei die Reste R unabhängig voneinander Wasserstoff, Halogen, C₁₋₂₀-Alkyl, C₆₋₂₀-Aryl oder C₇₋₂₀-Arylalkyl bedeuten. Bevorzugt werden als Aluminiumorganyl, Aluminiumtrialkyle verwendet.

Es bedeuten Me Methyl, nBu n-Butyl, iBu iso-Butyl.

Die benötigte Menge an Aluminiumorganyl richtet sich u.a. nach Art und Menge des verwendeten Monomeren, nach dem gewünschten Molekulargewicht (Molmasse) des Polymeren, das hergestellt werden soll, nach Art und Menge der verwendeten quartären Ammonium- und/oder Phosphoniumverbindung und ggf. Coinitiator (siehe unten) und nach der Polymerisationstemperatur. In der Regel verwendet man 0,01 bis 10, bevorzugt 0,5 bis 1 Mol-% Aluminiumorganyl, bezogen auf die Gesamtmenge der eingesetzten Monomeren.

Aus dem Gesagten ergibt sich, dass auch Mischungen verschiedener quartärer Ammonium- und/oder Phosphoniumverbindungen bzw. Aluminiumorganyle verwendet werden können.

Das molare Verhältnis von quartärer Ammonium- und/oder Phosphoniumverbindung zu Aluminiumorganyl kann in weiten Grenzen variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an quartärer Ammonium- und/oder Phosphoniumverbindung und Aluminiumorganyl derart, dass in der Reaktionsmischung pro ein Mol Ammonium- und/oder Phosphoniumverbindung 1 bis 100 mol Aluminiumorganyl vorliegen, d.h. bevorzugt beträgt das Molverhältnis von Aluminiumorganyl zu quartärer Ammonium- und/oder Phosphoniumverbindung, gerechnet als Aluminiumatome zu Ammonium-Stickstoffatome bzw. Phoshphonium-Phosphoratome, 1:1 bis 100:1. Besonders bevorzugt liegt das Molverhältnis von Aluminiumorganyl zu Ammonium- und/oder Phosphoniumverbindung bei 2:1 bis 50:1, insbesondere 4:1 bis 10:1. Beispielsweise kann man bei einem Verhältnis von etwa 5:1 arbeiten. Besonders bevorzugt liegt das Molverhältnis von Aluminiumorganyl zu Phosphoniumverbindung bei 1,1:1 bis 10:1. Beispielsweise kann man bei einem Verhältnis von etwa 5:1 arbeiten.

In einer bevorzugten Ausführungsform verwendet man zusätzlich zu der quaternären Ammonium- und/oder Phosphoniumverbindung und dem Aluminiumorganyl, einen Coinitiator. Dies kann beispielsweise dann vorteilhaft sein, wenn als Aluminiumorganyl eine Trialkylaluminiumverbindung wie TIBA oder TEA verwendet wird. Der Coinitiator aktiviert vermutlich die quartäre Ammonium- und/oder Phosphoniumverbindung.

Als Coinitiatoren eignen sich bevorzugt Aluminiumorganyle, wie sie bereits beschrieben wurden, z.B. solche der Formel R¹R²R³Al, wobei R¹, R² und R³ unabhängig voneinander Wasserstoff, Halogen, C₁₋₂₀-Alkyl, C₆₋₂₀-Aryl oder C₇₋₂₀-Arylalkyl bedeuten. Dabei können mindestens zwei der Reste R¹, R² und R³ voneinander verschieden sein. Geeignet sind beispielsweise Alkylaluminiumhydride R-Al-H₂ und R₂-Al-H, z.B. Diisobutylaluminiumhydrid iBu₂-AlH, sowie die bereits genannten Verbindungen Me-Al-(BHT)₂, (= iBu-Al-(BHT)₂), und (iBu)₂-Al-BHT, CAS-Nr. 56252-56-3. Weiterhin kann man auch Alkylaluminiumhalogenide R-Al-Hal₂ und R₂-Al-Hal (Hal = Halogen), z.B. Diethylaluminiumchlorid Et₂-Al-Cl, verwenden. Auch Aluminiumorganyle mit drei identischen, heteroatomhaltigen Resten, z.B. Aluminiumtrialkoholate wie Aluminium-tri-n-butanolat (nBuO)₃-Al, sind geeignet.

Ein Coinitiator kann mitverwendet werden, muss jedoch nicht. Falls er mitverwendet wird, richtet sich die benötigte Menge u.a. nach dem gewünschten Molekulargewicht (Molmasse) des Polymeren, das hergestellt werden soll, nach Art und Menge des verwendeten Aluminiumorganyls und der quartären Ammonium- und/oder Phosphoniumverbindung, und nach der Polymerisationstemperatur. In der Regel verwendet man 0,005 bis 10, bevorzugt 0,01 bis 10 und besonders bevorzugt 0,5 bis 1 Mol-% Coinitiator, bezogen auf die Gesamtmenge der eingesetzten Monomeren.

Das molare Verhältnis von quartärer Ammonium- und/oder Phosphoniumverbindung zu Coinitiator, falls letzterer mitverwendet wird, kann variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an Coinitiator derart, dass in der Reaktionsmischung pro ein Mol Ammonium- und/oder Phosphoniumverbindung 0,01 bis 10 mol Coinitiator vorliegen, d.h. bevorzugt beträgt das Molverhältnis von Coinitiator zu quartärer Ammonium- und/oder Phosphoniumverbindung, gerechnet als Aluminiumatome zu Stickstoffatome bzw. Phosphoratome, 0,01 : 1 bis 10 :1. Besonders bevorzugt liegt das Molverhältnis Coinitiator zu Ammonium- und/oder Phosphoniumverbindung bei 0,1 : 1 bis 5 : 1, insbesondere 0,5 : 1 bis 2 : 1. Beispielsweise kann man bei einem Verhältnis von etwa 1:1 arbeiten.

Man kann quartäre Ammonium- und/oder Phosphoniumverbindung, Aluminiumorganyl und ggf. den Coinitiator als solche zugeben, oder - bevorzugt - gelöst bzw. dispergiert (emulgiert oder suspendiert) in einem Lösungsmittel bzw. Dispersionsmittel. Dabei kann - muss jedoch nicht - dieses Lösungs- bzw. Dispersionsmittel identisch sein mit dem bei der Polymerisation verwendeten Lösungsmittel, siehe unten.

Die Zugabe von Ammonium- und/oder Phosphoniumverbindung, Aluminiumorganyl und ggf. Coinitiator kann sowohl zeitlich als auch räumlich betrachtet gemeinsam oder getrennt voneinander, diskontinuierlich auf einmal oder in mehreren Portionen, oder auch kontinuierlich, erfolgen. Bevorzugt ist die getrennte Zugabe.

Der Coinitiator wird bevorzugt zusammen mit oder nach der quartären Ammonium- und/oder Phosphoniumverbindung, und vor dem Aluminiumorganyl zugefügt (bzw. bevor man die Hauptmenge des Aluminiumorganyls zufügt). Es wird angenommen, dass er die quartäre Ammonium- und/oder Phosphoniumverbindung aktiviert.

In einer bevorzugten Ausführungsform ohne Coinitiator ist die Zugabereihenfolge 1) Monomer, 2) quartäre Ammonium- und/oder Phosphoniumverbindung, 3) Aluminiumorganyl. D.h. man fügt der Reaktionsmischung enthaltend die Oxiranmonomeren und ggf. Comonomeren, zunächst die quartäre Ammonium- und/oder Phosphoniumverbindung, und danach das Aluminiumorganyl, hinzu. Man kann auch 1) und 2) vertauschen, also Ammonium- und/oder Phosphoniumverbindung vorlegen und Monomer zufügen, solange nur das Aluminiumorganyl nach der Ammonium- und/oder Phosphoniumverbindung zugegeben wird.

Sofern ein Coinitiator mitverwendet wird, ist die Zugabereihenfolge bevorzugt 1) Ammonium- und/oder Phosphoniumverbindung + Coinitiator, 2) Monomer, 3) Aluminiumorganyl. D.h. man legt bevorzugt eine Mischung von quartärer Ammonium- und/oder Phosphoniumverbindung und Coinitiator vor, gibt das bzw. die Monomeren hinzu und fügt danach das Aluminiumorganyl hinzu. Man kann auch 1) und 2) vertauschen, also Monomer vorlegen und Ammonium- und/oder Phosphoniumverbindung und Coinitator zufügen. Zur Bereitung der Mischung von Ammonium- und/oder Phosphoniumverbindung und Coinitiator kann man z.B. beide Komponenten zusammen vorlegen, oder zunächst die Ammonium- und/oder Phosphoniumverbindung vorlegen und den Coinitiator zufügen.

Demnach fügt man bei dem erfindungsgemäßen Verfahren bevorzugt zunächst die quartäre Ammonium- und/oder Phosphoniumverbindung und danach das Aluminiumorganyl hinzu.

Bei der Polymerisation können Aminverbindungen mitverwendet werden, die das Alkalimetallatom durch Chelatbildung komplexieren. In Betracht kommen insbesondere tertiäre Aminverbindungen wie N,N,N',N'-Tetramethylmethylendiamin (TMMDA), N,N,N',N'-Tetramethylethylendiamin (TMEDA), N,N,N',N'-Tetramethylpropylendiamin (TMPDA), N,N,N',N'-Tetramethylhexendiamin (TMHDA) und andere N,N,N',N'-Tetraalkyldiamine, sowie Diazabicylco[2,2,2]octan (DABCO). Außerdem sind auch Amine wie Pentamethyldiethylentriamin geeignet.

Der Einsatz von Kronenethern und Kryptanden bei der Polymerisation ist möglich. Vorzugsweise wird jedoch auf deren Einsatz verzichtet. Unter Kronenethern sind planar gebaute, makrocyclische Polyether zu verstehen. Ihre Sauerstoffatome sind beispielsweise durch Ethylenbrücken verbunden. Zu Kronenethem zählen auch solche, deren Sauerstoffatome ganz oder teilweise durch Heteroatome wie N, P oder S ersetzt sind, und Spheranden, d.h. isocyclische Kohlenstoff-Ringe, die -OH oder andere polare Gruppen tragen, welche alle gleichgerichtet in das Innere eines Hohlraumes zeigen. Unter Kryptanden werden makropolycyclische, mit den Kronenethem verwandte Azapolyether verstanden, in denen zwei Brückenkopf-Stickstoffatome durch ein oder mehrere Sauerstoffatome enthaltende Brücken verbunden sind. Näheres siehe Römpp, Stichworte "Kronenether" und "Kryptanden". Der Zusatz von Kronenethem bzw. Kryptanden ist weder als Reagenz noch als Begleitstoff (z.B. Lösungsmittel) bevorzugt.

Durch den Verzicht auf diese (teuren) Verbindungen ist das erfindungsgemäße Verfahren nicht nur einfacher als die Verfahren des Standes der Technik, sondern auch wirtschaftlicher zu betreiben.

Die Polymerisation kann in Abwesenheit oder - bevorzugt - in Gegenwart eines Lösungsmittels durchgeführt werden. Bevorzugt ist das verwendete Lösungsmittel unpolar und enthält keine Sauerstoffatome oder andere die Polarität erhöhende Heteroatome. Die Polymerisation erfolgt besonders bevorzugt in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan oder Cyclohexan. Bevorzugt werden Lösungsmittel mit einem Siedepunkt oberhalb 70°C verwendet. Besonders bevorzugt wird Heptan, Toluol oder Cyclohexan verwendet.

Nach Beendigung der Polymerisation, d.h. nach Verbrauch der Monomeren, wird die Polymerisation abgebrochen. Während und auch nach Beendigung der Polymerisation, d.h. auch nachdem die Monomere verbraucht sind, liegen in der Reaktionsmischung "lebende" Polymerketten vor, d.h. bei erneuter Monomerzugabe springt die Polymerisationsreaktion sofort wieder an, ohne dass erneut Polymerisationsinitiator zugegeben werden muss. Durch Zugabe eines Kettenabbruchmittels, wird die Reaktion schließlich abgebrochen. Dabei terminiert das Abbruchmittel die lebenden Polymerkettenenden irreversibel.

Als Abbruchmittel kommen alle protonenaktiven Substanzen, und Lewis-Säuren, in Betracht. Geeignet sind beispielsweise Wasser, sowie C₁-C₁₀-Alkohole wie Methanol, Ethanol, Isopropanol, n-Propanol und die Butanole. Ebenfalls geeignet sind aliphatische und aromatische Carbonsäuren wie 2-Ethylhexansäure, sowie Phenole. Auch anorganische Säuren wie Kohlensäure (Lösung von CO₂ in Wasser) und Borsäure können verwendet werden. Bevorzugt wird als Abbruchmittel Ethanol verwendet.

Die erhaltene Reaktionsmischung kann danach, falls gewünscht, in an sich bekannter Weise auf das Polymere aufgearbeitet werden, z.B. mittels Entgasung in einem Entgasungsextruder oder Verdampfer. Durch die Entgasung werden Restmonomere und gebildete Oligomere, sowie bei der Polymerisation verwendete flüchtige Hilfs- und Begleitstoffe sowie insbesondere das Lösungsmittel, abgetrennt.

Die sonstigen Polymerisationsbedingungen wie Druck und Temperatur richten sich u.a. nach der Reaktivität und Konzentration der Monomere, den verwendeten Ammonium-, Phosphonium- und Aluminiumverbindungen und ihren Konzentrationen. Üblicherweise arbeitet man bei 0,1 bis 50, insbesondere 0,5 bis 10 bar Absolutdruck, und bei -50 bis 200, insbesondere -30 bis 100 und besonders bevorzugt -10 bis 80°C Reaktionstemperatur. Tiefe Temperaturen ermöglich eine bessere Kontrolle der Reaktion, jedoch ist die Polymerisationszeit länger. Die Polymerisationsdauer beträgt üblicherweise 5 min bis 48 Stunden, insbesondere 10 min bis 12 Stunden.

Das erfindungsgemäße Verfahren zur Herstellung der Polymere kann diskontinuierlich oder kontinuierlich, in jedem üblichen Behälter bzw. Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Alkalimetallverbindung und des Aluminiumorganyls, deren Konzentrationen, des speziell angewandten Verfahrensablaufs (z.B. Zugabereihenfolge) und anderer Parameter, wie Polymerisationsdauer und -temperatur und evtl. Temperaturverlauf, zu Polymerisaten unterschiedlichen Molekulargewichts. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Neben dem vorstehend beschriebenen Verfahren zur Polymerisation betrifft die Erfindung ebenso die nach dem Polymerisationsverfahren erhältlichen Polymere, d.h. Homopolymere aus Oxiranen, oder Copolymere aus Oxiranen und Comonomeren, oder deren Mischungen.

Solche Oxiran-Homopolymere sind insbesondere Polyethylenoxid und Polypropylenoxid. Das zahlenmittlere Molekulargewicht Mn des erhaltenen Polyethylenoxids (PEO) bzw. Polypropylenoxids (PPO) beträgt jeweils bevorzugt 1000 bis 1.000.000, insbesondere 5000 bis 500.000 und besonders bevorzugt 10.000 bis 200.000 g/mol.

Die erhaltenen Copolymere können statistisch aufgebaut sein, d.h. die Abfolge der Monomereinheiten im Copolymer ist rein statistisch, oder alternierend (abwechselnd Oxiran- und Comonomereinheiten). Sie können ebenso eine tapered-Struktur aufweisen. Tapered bedeutet, dass entlang der Polymerkette ein Gradient von Oxiran-reich nach Oxiran-arm oder umgekehrt vorliegt.

Bevorzugt jedoch weisen die Copolymere Blockstruktur auf, es handelt sich also um Blockcopolymere. Bevorzugt sind die Blockcopolymere aufgebaut aus mindestens einem Block aus dem oder den Oxiranen, und mindestens einem Block aus dem oder den Comonomeren. Die erfindungsgemäßen Blockcopolymere können z.B. lineare Zweiblock-Copolymere A-B oder Dreiblock-Copolymere B-A-B bzw. A-B-A sein. Dabei steht A für den Polyoxiran-Block und B für den Block aus Comonomer(en). Für Styrol als bevorzugtes Comonomer ist B demnach ein Polystyrolblock.

Die Blockstruktur entsteht im wesentlichen dadurch, dass man zunächst das Comonomer alleine anionisch polymerisiert, wodurch ein "lebender" Block aus dem Comonomeren entsteht. Nach Verbrauch des Comonomeren wechselt man das Monomere, indem man monomeres Oxiran zufügt und anionisch zu einem Oxiranblock polymerisiert, d.h. an den lebenden Comonomerblock wird ein Polyoxiranblock anpolymerisiert. Beispielsweise kann man zunächst Styrol alleine zu einem Polystyrolblock PS polymerisieren. Nach Verbrauch des Styrols erfolgt der Monomerwechsel, indem man Propylenoxid zufügt, das dann zum Polypropylenoxid-Block PPO polymerisiert wird. Als Ergebnis dieser sog. sequentiellen Polymerisation erhält man ein Zweiblockpolymer B-A, z.B. PS-PPO.

Man kann ebenso zunächst den Polyoxiranblock A herstellen, und danach den Block B aus dem oder den Comonomeren anpolymerisieren. Jedoch wird bevorzugt zunächst der Comonomerblock B und danach der Polyoxiranblock A polymerisiert, beispielsweise zuerst der Polystyrolblock und danach der PPO-Block.

Gegenstand der Erfindung ist demnach auch ein Verfahren, dadurch gekennzeichnet, dass es sich bei den Copolymeren um Blockcopolymere handelt, wobei durch sequentielle Polymerisation zunächst das Comonomer zu einem Polymerblock B polymerisiert wird, und danach das Oxiran zu einem Polyoxiranblock A polymerisiert wird

Aus den Zweiblockpolymeren können durch Kopplung mit einem weiteren lebenden Polymerblock Dreiblockcopolymere hergestellt werden. Dazu wird zunächst ein lebender Polymerblock separat hergestellt und danach mit einem Kopplungsmittel (siehe unten) an das Zweiblockcopolymer gekoppelt. Dreiblockcopolymere können auch mittels eines telechelen Mittelblocks hergestellt werden. So kann man an einen telechelen Polystyrolblock zwei endständige PPO-Blöcke anpolymerisieren, wodurch ein Dreiblockcopolymer PPO-PS-PPO entsteht. Bei den Dreiblockcopolymeren können die beiden Comonomerblöcke (z.B. Polystyrolblöcke) gleich groß (gleiches Molekulargewicht, also symmetrischer Aufbau) oder verschieden groß (unterschiedliches Molekulargewicht also asymmetrischer Aufbau sein. Die Blockgrößen hängen beispielsweise ab von den verwendeten Monomermengen und den Polymerisationsbedingungen.

In einer bevorzugten Ausführungsform wird zur Herstellung der Blockcopolymere eine Alkalimetallverbindung mitverwendet. Sie wirkt als Polymerisationsinitiator. Geeignete Alkalimetallverbindungen sind insbesondere Alkalimetallorganyle oder Alkalimetallhydride oder deren Mischungen. Als Alkalimetallorganyle verwendet man z.B. mono-, bi- oder multifunktionellen Alkalimetallalkyle, -aryle oder -aralkyle, insbesondere lithiumorganische Verbindungen wie Ethyl-, Propyl-, Isopropyl-, n-Butyl-, sec.-Butyl-, tert.-Butyl-, Phenyl-, Diphenylhexyl-, Hexamethylendi-, Butadienyl-, Isoprenyl-, Polystyryllithium oder die multifunktionellen Verbindungen 1,4-Dilithiobutan, 1,4-Dilithio-2-buten oder 1,4-Dilithiobenzol. Bevorzugt verwendet man sec.-Butyllithium. Geeignete Alkalimetallhydride sind z.B. Lithiumhydrid, Natriumhydrid oder Kaliumhydrid.

Die benötigte Menge an Alkalimetallverbindung richtet sich u.a. nach dem gewünschten Molekulargewicht (Molmasse) des Polymeren, das hergestellt werden soll, nach Art und Menge des verwendeten Retarders und nach der Polymerisationstemperatur. In der Regel verwendet man 0,0001 bis 10, bevorzugt 0,001 bis 1 und besonders bevorzugt 0,01 bis 0,2 Mol-% Alkalimetallorganyl, bezogen auf die Gesamtmenge der eingesetzten Monomeren.

Die Herstellung der Alkalimetallverbindungen ist bekannt bzw. die Verbindungen sind im Handel erhältlich.

Die Alkalimetallverbindung wird bevorzugt bei der Polymerisation des Polymerblocks B (Comonomerblock) mitverwendet. Dabei können sowohl die Alkalimetallverbindung als auch das Aluminiumorganyl und die Ammonium- und/oder Phosphoniumverbindung bereits bei der Polymerisation des ersten Blocks zugegeben werden. Jedoch kann man beispielsweise dann, wenn - wie es bevorzugt ist - zunächst der Comonomer-Block B (z.B. ein Polystyrolblock) und danach der Polyoxiran-Block A hergestellt wird, den Comonomerblock in Gegenwart der Alkalimetallverbindung polymerisieren (d.h. ohne Aluminiumorganyl) und das Aluminiumorganyl sowie die Ammonium- und/oder Phosphoniumverbindung erst bei der Polymerisation des Polyoxiranblocks zufügen.

Beispielsweise kann man zunächst aus Styrol mittels Alkalimetallverbindung (z.B. sec-Butyllithium) den Polystyrolblock herstellen, und erst bei der Zugabe des Oxiranmonomers das Aluminiumorganyl (z.B. TIBA) und die Ammonium- und/oder Phosphoniumverbindung (z.B. NnBu₄-Cl) zufügen und zum Polyoxiranblock polymerisieren.

Besonders bevorzugt gibt man - nach der Herstellung des Comonomerblocks - erst das Oxiranmonomer und die Ammonium- und/oder Phosphoniumverbindung, und nach dem Anspringen der Reaktion das Aluminiumorganyl hinzu.

Die genannten Blockcopolymere können eine (vorstehend beschriebene) lineare Struktur aufweisen. Jedoch sind auch verzweigte oder sternförmige Strukturen möglich und für manche Anwendungen bevorzugt. Verzweigte Blockcopolymere erhält man in bekannter Weise, z.B. durch Pfropfreaktionen von polymeren "Seitenästen" auf eine Polymer-Hauptkette. Sternförmige Blockcopolymere sind z.B. durch Umsetzung der lebenden anionischen Kettenenden mit einem mindestens bifunktionellen Kopplungsmittel, wie z.B. epoxidierten Glyceriden (z. B. epoxidiertem Leinsamenöl oder Sojaöl), Siliciumhaiogeniden wie SiCl₄, Divinylbenzol, polyfunktionellen Aldehyden, Ketonen, Estem, Anhydriden oder Epoxiden, oder speziell für die Dimerisierung Dichlordialkylsilanen, Dialdehyden wie Terephthalaldehyd und Estern wie Ethylformiat, erhältlich. Durch Kopplung gleicher oder verschiedener Polymerketten kann man symmetrische oder asymmetrische Stemstrukturen herstellen, d.h. die einzelnen Stemäste können gleich oder verschieden sein.

Die erfindungsgemäßen Polymere können außerdem übliche Zusatzstoffe und Verarbeitungshilfsmittel in der für diese Stoffe üblichen Mengen enthalten, z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Die Herstellung der Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Aus den erfindungsgemäßen Homo- und Copolymeren lassen sich Formkörper (auch Halbzeuge) Folien, Fasern und Schäume aller Art herstellen.

Gegenstand der Erfindungen sind demnach auch die Verwendung der erfindungsgemäßen Homo- und Copolymere zur Herstellung von Formkörpern, Folien, Fasern und Schäumen, sowie die aus den Polymeren erhältlichen Formkörper, Folien, Fasern und Schäume.

Das erfindungsgemäße Verfahren ist ein alternatives Verfahren zur Polymerisation von Oxiranen und weist gegenüber den Verfahren des Standes der Technik u.a. ökonomische Vorteile auf. Die Polymerisationszeiten sind deutlich kürzer als bei den bisher bekannten Verfahren. Zugleich sind trotz der kürzeren Polymerisationszeit die erzielten Molekulargewichte höher, siehe etwa Beispiel H8 mit einem Mn von 86600 g/mol nach nur 45 min.

Die verwendeten Initiatorsysteme bzw. ihre Komponenten sind einfacher als diejenigen des Standes der Technik.

Das Verfahren erlaubt die Herstellung von Homo- und Copolymeren auf gleichermaßen einfache Weise. Die erhaltenen Polymere zeichnen sich durch geringe Gehalte an Restmonomeren bzw. -oligomeren aus. Außerdem lassen sich PO-Homopolymere und PO-EO-Copolymere unter ähnlichen Verfahrensbedingungen herstellen, was wegen des preiswerteren EO wirtschaftlich vorteilhaft ist.

Das gefundene Verfahren erlaubt eine bessere Kontrolle der Oxiranpolymerisation, d.h. die Polymerisation der reaktiven Oxirane lässt sich auf einfache Weise steuern.

### Beispiele:

### 1. Einsatzstoffe

Es wurden die unter 1a, 1b und Ic genannten Verbindungen verwendet, wobei "gereinigt" bedeutet, dass mit Aluminoxan gereinigt und getrocknet wurde, sofern nicht anders angegeben. Handelsprodukte wurden ohne weitere Reinigung verwendet.

### 1a. Monomere, Lösungsmittel und Hilfsstoffe

- Styrol, gereinigt
- Propylenoxid (PO), gereinigt durch Behandeln mit Calciumhydrid
- Cyclohexan, gereinigt Toluol, gereinigt
- Tetrahydrofuran (THF), gereinigt durch Destillation
- Ethanol oder Wasser (als Abbruchmittel).

### 1b. Quartäre Ammoniumverbindungen, Aluminiumorganyle und Alkalimetallverbindungen

Alle nachfolgenden Verdünnungen bzw. Umsetzungen wurden unter Rühren, bei 25°C und unter Schutzgas vorgenommen, sofern nicht anders angegeben. Es wurden folgende Lösungen bzw. Feststoffe verwendet:
#1: Triisobutylaluminium (TIBA) iBu₃-Al, als 1,0 molare Lösung:
   Es wurde eine fertige Lösung in Toluol (von Fa. Aldrich) verwendet.
#2: Triethylaluminium (TEA) Et₃-AI, als 1,0 molare Lösung:
   Eine 1,9 molare Triethylaluminium-Lösung in Toluol (fertige Lösung von Fa. Aldrich) wurde mit Toluol auf eine Konzentration von 1 mol/l verdünnt.
#3: Tetra-n-butylammonium-isopropanolat NnBu₄-OiPr als Feststoff:
   0,954 g (3,43 mmol) Tetra-n-butylammoniumchlorid-Hydrat NnBu₄-Cl•H₂O (98 %, Feststoff von Fa. Aldrich) wurden mit 3 ml Isopropanol (99 %, Fa. Aldrich) versetzt. Nachdem sich der Feststoff vollständig gelöst hatte, wurde das Isopropanol durch Kryodestillation entfernt. Das Zugeben und Entfernen von Isopropanol wurde noch 3 mal wiederholt. Anschließend wurden zum Lösen des nunmehr wasserfreien NnBu₄-Cl, 1 ml Isopropanol zugegeben, und 3 ml THF zugefügt. Danach gab man 2,5 ml einer 1,35 molaren Lösung von Natriumisopropanolat in THF hinzu. Nach 1 Stunde wurde vom entstandenen weißen NaCl-Niederschlag abfiltriert. Man erhielt eine Lösung von NnBu₄-OiPr in THF/Isopropanol, aus der das Lösungsmittelgemisch durch Kryodestillation entfernt wurde. Man erhielt NnBu₄-OiPr als Feststoff.
#4: Tetraethylammonium-isopropanolat NEt₄-OiPr als Feststoff:
   Es wurde vorgegangen wie für NnBu₄-OiPr (#3) beschrieben, jedoch wurde anstelle von NnBu₄-Cl-Hydrat, 0,568 g (3,43 mmol) Tetraethylammoniumchlorid-Hydrat NEt₄-Cl • H₂O (98 %, Feststoff von Fa. Aldrich) eingesetzt. Man erhielt NEt₄-OiPr als Feststoff.
#5: Tetra-n-butylammoniumchlorid NnBu₄-Cl als Feststoff:
   0,55 g (1,98 mmol) Tetra-n-butylammoniumchlorid-Hydrat NnBu₄-Cl • H₂O (Feststoff von Fa. Aldrich) wurden mit 3 ml Isopropanol (99 %, Fa. Aldrich) versetzt. Nachdem sich der Feststoff vollständig gelöst hatte, wurde das Isopropanol durch Kryodestillation entfernt. Das Zugeben und Entfernen von Isopropanol wurde noch 3 mal wiederholt. Man erhielt wasserfreies NnBu₄-Cl als Feststoff.
#6: Tetra-n-butylammonium-hydroxid NnBu₄-OH als Feststoff:
   Aus einer 1,0 molaren Lösung von Tetra-n-butylammonium-hydroxid NnBu₄-OH in Methanol (fertige Lösung von Fa. Aldrich) wurde der Feststoff durch Kryodestillieren des Methanols isoliert, und anschließend durch Behandeln mit Isopropanol wasserfrei gemacht wie für NnBu₄-Cl (#5) beschrieben.
#7: Tetra-n-butylammoniumacetat NnBu₄-OOC(CH₃) als Feststoff:
   Es wurde ein Handelsprodukt (97 %) von Fa. Aldrich verwendet.
#8: Diisobutylaluminiumhydrid iBu₂-AlH als 1,0 molare Lösung:
   Es wurde eine fertige, 1,0 molare Lösung in Toluol verwendet (Fa. Aldrich).
#9: Lanthanocen Cp₃La als 1,0 molare Lösung:
   Festes Lanthanocen Cp₃La (99,9 % von Fa. Aldrich) wurde in Toluol zu einer 1,0 molaren Lösung gelöst. Cp bedeutet Cyclopentadienyl.
#10: Methyl-aluminium-bis(2,6-di-tert-butyl-4-methylphenolat) Me-Al-(BHT)₂ als 1,0 molare Lösung:
   Es wurde eine fertige, 1,0 molare Lösung in Toluol verwendet (Fa. TCl interchim).
#11: Diethylaluminiumchlorid Et₂-Al-Cl als 1,0 molare Lösung:
   Es wurde eine fertige, 1,0 molare Lösung in Toluol verwendet (Fa. Aldrich).
#12: Aluminium-tri-n-butanolat (nBuO)₃-Al als 1,0 molare Lösung:
   Festes Aluminium-tri-n-butanolat (nBuO)₃-Al (95 % von Fa. Aldrich) wurde in Toluol zu einer 1,0 molaren Lösung gelöst.
#13: sec-Butyllithium (sBuLi) als 1,3 molare Lösung in Toluol:
   Es wurde eine fertige, 1,3 molare Lösung in Toluol verwendet (Fa. Aldrich).

### 1c. Quartäre Phosphoniumverbindungen

CIPBu₄ Trocknung:
   CIPBu₄ wurde mit Methanol gewaschen anschließend wurden Restmengen Wasser und Methanol azeotrop abdestilliert. Der Feststoff wurde mit
   Toluol gewaschen und die Restmengen des Lösungsmittels im Vakuum abdestilliert.

### 2. Herstellung der Polymere

Alle Polymerisationen wurden unter Feuchtigkeitsausschluss in einer glove box mit Stickstoffatmoshäre durchgeführt. Es wurde ein mit Magnetrührer und Septum ausgestatteter, temperierbarer Rundkolben verwendet. Während der Polymerisation wurde gerührt und die Abnahme der Monomerkonzentration gravimetrisch verfolgt.

Die Molekulargewichte und Molekulargewichtsverteilungen der erhaltenen Polymermischung wurden durch Gelpermeationschromatographie (GPC) bestimmt mit Tetrahydrofuran als Eluent und Kalibration mit Polystyrolstandards. Aus dem zahlenmittleren Molekulargewicht Mn und dem gewichtsmittleren Molekulargewicht Mw wurde der Polydispersitätsindex PDI = Mw/Mn, bestimmt.

Mit "Molverhältnis Al/N" ist das Molverhältnis von Aluminium aus dem Aluminiumorganyl zu Ammonium-Stickstoff aus der Ammoniumverbindung, gemeint.

### 2a. Herstellung von PPO-Homopolymeren H (mit Ammoniumsalzen)

### Beispiel H1

Zu 34,9 ml Cyclohexan wurden 11,7 ml PO gegeben. Man gab 0,1 g festes NEt₄-OiPr (#4), und danach 3,4 ml der TIBA-Lösung (#1), hinzu, sodass das Molverhältnis Al/N 7,25:1 betrug. Es wurde 60 Minuten bei 0°C polymerisiert und danach durch Zugabe von 5 ml Ethanol abgebrochen. Die Ergebnisse waren wie folgt: Umsatz 100 %, Polydispersitätsindex (PDI) 1,31, zahlenmittleres Molekulargewicht Mn 19800 g/mol.

### Beispiel H2

Zu 38,9 ml Cyclohexan wurden 9,7 ml PO gegeben. Man gab 0,017 g festes NEt₄-OiPr (#4), und danach 1,36 ml der TIBA-Lösung (#1), hinzu, sodass das Molverhältnis Al/N 17,5:1 betrug. Es wurde 3 Stunden bei 0°C polymerisiert und danach durch Zugabe von 5 ml Ethanol abgebrochen. Die Ergebnisse waren wie folgt: Umsatz 97 %, Polydispersitätsindex (PDI) 1,4, zahlenmittleres Molekulargewicht Mn 64700 g/mol.

### Beispiel H3

Zu 34,9 ml Cyclohexan wurden 11,7 ml PO gegeben. Man gab 0,1 g festes NEt₄-OiPr (#4), und danach 3,4 ml der TEA-Lösung (#2), hinzu, sodass das Molverhältnis Al/N 7,25:1 betrug. Es wurde 16 Stunden bei 0°C polymerisiert und danach durch Zugabe von 5 ml Ethanol abgebrochen. Die Ergebnisse waren wie folgt: Umsatz 88 %, Polydispersitätsindex (PDI) 1,6, zahlenmittleres Molekulargewicht Mn 5300 g/mol.

### Beispiel H4

Zu 36,8 ml Cyclohexan wurden 12,3 ml PO gegeben. Man gab 0,179 g festes NnBu₄-OiPr (#3), und danach 0,88 ml der TIBA-Lösung (#1), hinzu, sodass das Molverhältnis Al/N 1,45:1 betrug. Es wurde 45 min bei 0°C polymerisiert und danach durch Zugabe von 5 ml Ethanol abgebrochen. Die Ergebnisse waren wie folgt: Umsatz 100 %, Polydispersitätsindex (PDI) 1,2, zahlenmittleres Molekulargewicht Mn 17200 g/mol. Beispiel H5

Zu 35,5 ml Cyclohexan wurden 12,7 ml PO gegeben. Man gab 0,042 g festes NnBu₄-OiPr (#3), und danach 1,84 ml der TIBA-Lösung (#1), hinzu, sodass das Molverhältnis Al/N 13,04:1 betrug. Es wurde 60 min bei 0°C polymerisiert und danach durch Zugabe von 5 ml Ethanol abgebrochen. Die Ergebnisse waren wie folgt: Umsatz 96 %, Polydispersitätsindex (PDI) 1,17, zahlenmittleres Molekulargewicht Mn 78700 g/mol.

### Beispiel H6

Zu 40,7 ml Cyclohexan wurden 8,1 ml PO gegeben. Man gab 0,011 g festes NnBu₄-OiPr (#3), und danach 1,17 ml der TIBA-Lösung (#1), hinzu, sodass das Molverhältnis Al/N 31, 16:1 betrug. Es wurde 17 Stunden bei 0°C polymerisiert und danach durch Zugabe von 5 ml Ethanol abgebrochen. Die Ergebnisse waren wie folgt: Umsatz 100 %, Polydispersitätsindex (PDI) 1,65, zahlenmittleres Molekulargewicht Mn 86900 g/mol.

### Beispiel H7

Zu 35,9 ml Cyclohexan wurden 12,3 ml PO gegeben. Man gab 0,179 g festes NnBu₄-OiPr (#3), und danach 1,76 ml der TEA-Lösung (#2), hinzu, sodass das Molverhältnis Al/N 2,95:1 betrug. Es wurde 2 Stunden bei 0°C polymerisiert und danach durch Zugabe von 5 ml Ethanol abgebrochen. Die Ergebnisse waren wie folgt: Umsatz 19 %, Polydispersitätsindex (PDI) 1,21, zahlenmittleres Molekulargewicht Mn 3200 g/mol.

### Beispiel H8

Zu 36,8 ml Cyclohexan wurden 12,3 ml PO gegeben. Man gab 0,026 g festes NnBu₄-Cl (#5), und danach 0,88 ml der TIBA-Lösung (#1), hinzu, sodass das Molverhältnis Al/N 9,68:1 betrug. Es wurde 45 min bei 0°C polymerisiert und danach durch Zugabe von 5 ml Ethanol abgebrochen. Die Ergebnisse waren wie folgt: Umsatz 98 %, Polydispersitätsindex (PDI) 1,6, zahlenmittleres Molekulargewicht Mn 86600 g/mol.

### Beispiel H9

Zu 34,2 ml Cyclohexan wurden 12,3 ml PO gegeben. Man gab 0,125 g festes NnBu4-OH (#6), und danach 3,5 ml der TIBA-Lösung (#1), hinzu, sodass das Molverhältnis Al/N 7,2:1 betrug. Es wurde 5 Stunden bei 0°C polymerisiert und danach durch Zugabe von 5 ml Ethanol abgebrochen. Die Ergebnisse waren wie folgt: Umsatz 56 %, Polydispersitätsindex (PDI) 1,3, zahlenmittleres Molekulargewicht Mn 19000 g/mol.

### Beispiel H10

Zu 35,6 ml Cyclohexan wurden 12,6 ml PO gegeben. Man gab 0,141 g festes NnBu₄-OOC(CH₃) (#7), und danach 1,8 ml der TIBA-Lösung (#1), hinzu, sodass das Molverhältnis Al/N 3,87:1 betrug. Es wurde 60 min bei 0°C polymerisiert und danach durch Zugabe von 5 ml Ethanol abgebrochen. Die Ergebnisse waren wie folgt: Umsatz 91 %, Polydispersitätsindex (PDI) 1,8, zahlenmittleres Molekulargewicht Mn 52100 g/mol.

In den nachfolgenden Beispielen H11 bis H21 wurde ein Coinitiator mitverwendet. Das Molverhältnis von Aluminium aus dem Coinitiator zu Ammonium-Stickstoff aus der Ammoniumverbindung, betrug in allen erfindungsgemäßen Beispielen 1 : 1, mit Ausnahme von Beispiel H21. "Molverhältnis Al/N" bedeutet unverändert das Molverhältnis von Aluminium aus dem Aluminiumorganyl zu Ammonium-Stickstoff aus der Ammoniumverbindung.

### Beispiel H11

Zu 37,4 ml Cyclohexan wurden 0,134 g festes NnBu₄-Cl (#5), und danach 0,48 ml der iBu₂-AlH-Lösung als Coinitiator (#8), gegeben. Anschließend gab man 11,3 ml PO und danach 0,82 ml der TIBA-Lösung (#1) hinzu, sodass das Molverhältnis Al/N 1,71:1 betrug. Es wurde 30 min bei 0°C polymerisiert und danach durch Zugabe von 5 ml Ethanol abgebrochen. Die Ergebnisse waren wie folgt: Umsatz 98 %, Polydispersitätsindex (PDI) 1,6, zahlenmittleres Molekulargewicht Mn 23100 g/mol.

### Vergleichsbeispiel H12

Beispiel H11 wurde wiederholt, wobei jedoch keine TIBA-Lösung zugefügt wurde. Nach 4 Stunden bei 0°C wurde abgebrochen. Der Umsatz betrug 0 %.

### Vergleichsbeispiel H13

Beispiel H11 wurde wiederholt, wobei jedoch keine iBu₂-AlH-Lösung zugefügt wurde, und anstelle der TIBA-Lösung eine Mischung gleicher Volumina TIBA-Lösung (#1) und Cp₃La-Lösung (#9), verwendet wurde. Nach 17 Stunden bei 23°C wurde abgebrochen. Der Umsatz betrug 0 %.

### Beispiel H14

Zu 37,5 ml Cyclohexan wurden 0,133 g festes NnBu₄-Cl (#5), und danach 0,48 ml der Me-Al-(BHT)₂-Lösung als Coinitiator (#10), gegeben. Anschließend gab man 11,2 ml PO und danach 0,85 ml der TEA-Lösung (#2) hinzu, sodass das Molverhältnis AI/N 1,8:1 betrug. Es wurde 48 Stunden bei 23°C polymerisiert und danach durch Zugabe von 5 ml Ethanol abgebrochen. Die Ergebnisse waren wie folgt: Umsatz 24 %, Polydispersitätsindex (PDI) 1,7, zahlenmittleres Molekulargewicht Mn 4200 g/mol.

### Beispiel H15

Zu 37,5 ml Cyclohexan wurden 0,133 g festes NnBu₄-Cl (#5), und danach 0,48 ml der Et₂-Al-Cl-Lösung als Coinitiator (#11), gegeben. Anschließend gab man 11,2 ml PO und danach 0,85 ml der TEA-Lösung (#2) hinzu, sodass das Molverhältnis Al/N 1,8:1 betrug. Es wurde 24 Stunden bei 23°C polymerisiert und danach durch Zugabe von 5 ml Ethanol abgebrochen. Die Ergebnisse waren wie folgt: Umsatz 62 %, Polydispersitätsindex (PDI) 1,7, zahlenmittleres Molekulargewicht Mn 7500 g/mol.

### Vergleichsbeispiel H16

Beispiel H11 wurde wiederholt, wobei keine iBu₂-AIH-Lösung und keine TIBA-Lösung, jedoch 0,82 ml der Et₂-Al-Cl-Lösung (#11) zugefügt wurden. Nach 24 Stunden bei 23°C wurde abgebrochen. Der Umsatz betrug 0 %.

### Beispiel H17

Zu 38,4 ml Cyclohexan wurden 0,605 g festes NnBu₄-Cl (#5), und danach 2,2 ml der Me-Al-(BHT)₂-Lösung als Coinitiator (#10), gegeben. Anschließend gab man 7,8 ml PO und danach 3,3 ml der TIBA-Lösung (#1) hinzu, sodass das Molverhältnis Al/N 1,5:1 betrug. Es wurde 20 min bei 0°C polymerisiert und danach durch Zugabe von 5 ml Ethanol abgebrochen. Die Ergebnisse waren wie folgt: Umsatz 100 %, Polydispersitätsindex (PDI) 1,5, zahlenmittleres Molekulargewicht Mn 7000 g/mol.

### Beispiel H18

Zu 37,5 ml Cyclohexan wurden 0,132 g festes NnBu₄-Cl (#5), und danach 0,48 ml der Me-Al-(BHT)₂-Lösung als Coinitiator (#10), gegeben. Anschließend gab man 11,2 ml PO und danach 0,8 ml der TIBA-Lösung (#1) hinzu, sodass das Molverhältnis Al/N 1,6:1 betrug. Es wurde 20 min bei 0°C polymerisiert und danach durch Zugabe von 5 ml Ethanol abgebrochen. Die Ergebnisse waren wie folgt: Umsatz 72 %, Polydispersitätsindex (PDI) 1,8, zahlenmittleres Molekulargewicht Mn 31800 g/mol.

### Beispiel H19

Zu 39,3 ml Cyclohexan wurden 0,647 g festes NnBu₄-Cl (#5), und danach 2,33 ml der Et₂-Al-Cl-Lösung als Coinitiator (#11), gegeben. Anschließend gab man 7,7 ml PO und danach 0,62 ml der TIBA-Lösung (#1) hinzu, sodass das Molverhältnis AI/N 0,27:1 betrug. Es wurde 17 Stunden bei 0°C polymerisiert und danach durch Zugabe von 5 ml Ethanol abgebrochen. Die Ergebnisse waren wie folgt: Umsatz 29 %, Polydispersitätsindex (PDI) 1,1, zahlenmittleres Molekulargewicht Mn 600 g/mol.

### Beispiel H20

Zu 37,5 ml Cyclohexan wurden 0,134 g festes NnBu₄-Cl (#5), und danach 0,48 ml der Et₂-Al-Cl-Lösung als Coinitiator (#11), gegeben. Anschließend gab man 11,2 ml PO und danach 0,79 ml der TIBA-Lösung (#1) hinzu, sodass das Molverhältnis Al/N 1,6:1 betrug. Es wurde 90 min bei 0°C polymerisiert und danach durch Zugabe von 5 ml Ethanol abgebrochen. Die Ergebnisse waren wie folgt: Umsatz 71 %, Polydispersitätsindex (PDI) 1,5, zahlenmittleres Molekulargewicht Mn 16700 g/mol.

### Beispiel H21

Zu 37,2 ml Cyclohexan wurden 0,123 g festes NnBu₄-Cl (#5), und danach 1,6 ml der (nBuO)₃-Al-Lösung als Coinitiator (#12), gegeben. Anschließend gab man 10,5 ml PO und danach 0,74 ml der TIBA-Lösung (#1) hinzu, sodass das Molverhältnis Al_{Al-organyl}/N 1,6:1, und das Molverhältnis Al_{Coinitiator}/N 3,6:1, betrug. Es wurde 4 Stunden bei 0°C polymerisiert und danach durch Zugabe von 5 ml Ethanol abgebrochen. Die Ergebnisse waren wie folgt: Umsatz 50 %, Polydispersitätsindex (PDI) 1,4, zahlenmittleres Molekulargewicht Mn 2000 g/mol.

### Vergleichsbeispiel H22

Beispiel H11 wurde wiederholt, wobei keine iBu₂-AIH-Lösung und keine TIBA-Lösung, jedoch 0,82 ml der (nBuO)₃-Al-Lösung (#12) zugefügt wurden. Nach 24 Stunden bei 23°C wurde abgebrochen. Der Umsatz betrug 0 %.

### 2b. Herstellung von PPO-Homopolymeren H (mit Phosphoniumsalzen)

### Beispiel H23: TIBA/CIPBu₄ (1,3 : 1)

Zu 0,084 ml einer CIPBu₄ Lösung (0,2M in Toluol, 0,0168 mmol) wurden 7 ml Toluol und 3 ml PO (42,9 mmol) gegeben. Dazu wurden 0,022 ml einer TIBA Lösung (1 M in Hexan, Fluka) gegeben (molares Verhältnis AI/P = 1,3). Die Abnahme der Monomeren-Konzentration wurde bei 0°C gravimetrisch verfolgt. Nach 1,5 Stunden wurde die Reaktion mit 1 ml Ethanol abgebrochen. Der Umsatz betrug zu diesem Zeitpunkt 74 Gew - %. GPC-Analyse der erhaltenen Polymermischung zeigte einen Polydispersitätsindex (PDI) von Mw/Mn = 1,10 mit einer Molmasse Mn = 10700 g/mol.

### Beispiel H24: TIBA/CIPBu₄ (1,53 : 1)

Zu 0,032 ml einer CIPBu₄ Lösung (0,2M in Toluol, 0,00635 mmol) wurden 7 ml Toluol und 3 ml PO (42,9 mmol) gegeben. Dazu wurden 0,010 ml einer TIBA Lösung (1 M in Hexan, Fluka) gegeben (molares Verhältnis Al/P = 1,53). Die Abnahme der Monomeren-Konzentration wurde bei 0°C gravimetrisch verfolgt. Nach 1,5 Stunden wurde die Reaktion mit 1 ml Ethanol abgebrochen. Der Umsatz betrug zu diesem Zeitpunkt 48 Gew-%. GPC-Analyse der erhaltenen Polymermischung zeigte einen Polydispersitätsindex von Mw/Mn = 1,20 mit einer Molmasse Mn = 18200 g/mol.

### Beispiel H25: TIBA/CIPBu₄ (5 : 1)

Zu 0,019 ml einer CIPBu₄ Lösung (0,2M in Toluol, 0,00386 mmol) wurden 7 ml Toluol und 3 ml PO (42,9 mmol) gegeben. Dazu wurden 0,020 ml einer TIBA Lösung (1 M in Hexan, Fluka) gegeben (molares Verhältnis AI/P = 5). Die Abnahme der Monomeren-Konzentration wurde bei 0°C gravimetrisch verfolgt. Nach 2 Stunden wurde die Reaktion mit 1 ml Ethanol abgebrochen. Der Umsatz betrug zu diesem Zeitpunkt 48 Gew.-%. GPC-Analyse der erhaltenen Polymermischung zeigte einen Polydispersitätsindex von Mw/Mn = 1,20 mit einer Molmasse Mn = 29800 g/mol.

### Beispiel H26: TIBA/CIPBu₄ (1,1 : 1)

Zu 0,058 mL einer CIPBu₄ Lösung (0,2M in Toluol, 0,0116 mmol) wurden 7 mL Toluol und 3 ml PO (42,9 mmol) gegeben. Dazu wurden 0,013 ml einer TIBA Lösung (1 M in Hexan, Fluka) gegeben (molares Verhältnis Al/P = 1,1). Die Abnahme der Monomeren-Konzentration wurde bei 0°C gravimetrisch verfolgt. Nach 6 Szunden wurde die Reaktion mit 1 ml Ethanol abgebrochen. Der Umsatz betrug zu diesem Zeitpunkt 50 Gew.-%. GPC-Analyse der erhaltenen Polymermischung zeigte einen Polydispersitätsindex von Mw/Mn = 1,18 mit einer Molmasse Mn = 12300 g/mol.

### Beispiel H27: TIBA/CIPBu₄ (1,3 : 1)

Zu 0,085 ml einer CIPBu₄ Lösung (0,2M in Toluol, 0,0170 mmol) wurden 7 ml Toluol und 3 ml PO (42,9 mmol) gegeben. Dazu wurden 0,023 ml einer TIBA Lösung (1 M in Hexan, Fluka) gegeben (molares Verhältnis AI/P = 1,3). Die Abnahme der Monomeren-Konzentration wurde bei 20°C gravimetrisch verfolgt. Nach einer Stunde wurde die Reaktion mit 1 ml Ethanol abgebrochen. Der Umsatz betrug zu diesem Zeitpunkt 80 Gew.-%. GPC-Analyse der erhaltenen Polymermischung zeigte einen Polydispersitätsindex von Mw/Mn = 1,30 mit einer Molmasse Mn = 7800 g/mol.

### Beispiel H28: TIBA/CIPBu₄ (1,2 : 1)

Zu 0,058 ml einer CIPBu₄ Lösung (0,2M in Toluol, 0,0116 mmol) wurden 7 ml Toluol und 3 ml PO (42,9 mmol) gegeben. Dazu wurden 0,014 ml einer TIBA Lösung (1 M in Hexan, Fluka) gegeben (molares Verhältnis AI/P = 1,2). Die Abnahme der Monomeren-Konzentration wurde bei 50°C gravimetrisch verfolgt. Nach 2 Stunden wurde die Reaktion mit 1 ml Ethanol abgebrochen. Der Umsatz betrug zu diesem Zeitpunkt 98 Gew.-%. GPC-Analyse der erhaltenen Polymermischung zeigte einen Polydispersitätsindex von Mw/Mn = 1,32 mit einer Molmasse Mn = 12000 g/mol.

### Vergleichsbeispiel H29: TIBA/CIPBu₄ (0,88 : 1).

Zu 0,063 ml einer ClPBu₄ Lösung (0,2M in Toluol, 0,0125 mmol) wurden 7 ml Toluol und 3 ml PO (42,9 mmol) gegeben. Dazu wurden 0,011 ml einer TIBA Lösung (1 M in Hexan, Fluka) gegeben (molares Verhältnis AI/P = 0,88). Die Abnahme der Monomeren-Konzentration wurde bei 50°C gravimetrisch verfolgt. Nach 24 Stunden wurde die Reaktion mit 1 ml Ethanol abgebrochen. Der Umsatz betrug zu diesem Zeitpunkt 0 Gew.-%.

### 2c. Herstellung von PO-Blockcopolymeren C

### Beispiel C1

a) Zu 13,0 ml Cyclohexan wurden 1,5 ml Styrol und 0,1 ml der s-BuLi-Lösung (#13) gegeben. Es wurde 60 min bei 0°C polymerisiert und danach eine Probe genommen. Die Ergebnisse waren wie folgt: Umsatz 100 %, Polydispersitätsindex (PDI) 1,1, zahlenmittleres Molekulargewicht Mn 12500 g/mol. Vermutlich lag ein Polystyryllithium-Block PS-Li vor.
b) Zu 14,0 ml der unter a) erhaltenen, orangefarbenen Lösung gab man eine Lösung von 0,0364 g NnBu₄-Cl (#5) in 3 ml PO. Nachdem die Mischung farblos geworden war gab man 0,6 ml der TIBA-Lösung (#1) hinzu, sodass das Molverhältnis Al/N 5:1 betrug. Es wurde 2,5 Stunden min bei 0°C polymerisiert und danach durch Zugabe von 2 ml Ethanol abgebrochen. Die Ergebnisse des erhaltenen PS-PPO-Blockcopolymeren waren wie folgt: Umsatz 97 %, Polydispersitätsindex (PDI) 1,3, zahlenmittleres Molekulargewicht Mn 17700 g/mol.

### Beispiel C2

a) Zu 15,0 ml Cyclohexan wurden 7,5 ml Styrol und 0,55 ml der s-BuLi-Lösung (#13) gegeben. Es wurde 60 min bei 0°C polymerisiert, danach 0,3 ml PO und schließlich 5 Tropfen einer Mischung gleicher Volumina von Wasser und konz. HCl, zugefügt. Nachdem die Mischung farblos geworden war, wurde eine Probe genommen. Die Ergebnisse waren wie folgt: Umsatz 99,5 %, Polydispersitätsindex (PDI) 1,1, zahlenmittleres Molekulargewicht Mn 8900 g/mol. Vermutlich lag ein Polystyrolblock mit einer endständigen Hydroxydgruppe, PS-OH, vor. Das Polymer wurde in üblicher Weise isoliert.
b) 1,68 g des unter a) erhaltenen Polymeren wurden in 13,0 ml Cyclohexan gelöst. Man gab 0,1 ml der TIBA-Lösung (#1) hinzu und hielt 3 Stunden bei 23°C. Danach wurde eine Lösung von 0,0275 g NnBu₄-Cl (#5) in 4 ml PO zugefügt und 60 min bei 0°C gehalten. Anschließend gab man 1,2 ml der TIBA-Lösung (#1) zu, sodass das Molverhältnis Al/N 6:1 betrug, und polymerisierte 2,5 Stunden bei 0°C. Danach wurde mit 2 ml Ethanol abgebrochen. Die Ergebnisse des erhaltenen PS-PPO-Blockcopolymeren waren wie folgt: Umsatz 98 %, Polydispersitätsindex (PDI) 1,3, zahlenmittleres Molekulargewicht Mn 10000 g/mol.

Die Beispiele zeigen, dass sich mit dem erfindungsgemäßen Verfahren sowohl Homoals auch Copolymere von Oxiranen auf einfache Weise herstellen ließen. Die Polymerisationszeiten waren erheblich kürzer bzw. die erzielten Molekulargewichte Mn waren deutlich höher als bei den bekannten Verfahren: siehe z.B. Beispiel H5, 78700 nach nur 60 min; Beispiel H8, 86600 nach nur 45 min; und Beispiel H18, 31800 nach nur 20 min. Dies gilt auch für die Copolymere, etwa in Beispiel C1 mit Mn 17700 nach 60 min für den PS-Block und 2,5 Stunden für den PPO-Block.

## Patentansprüche

1. Verfahren zur Herstellung von Homopolymeren aus Oxiranen, oder von Copolymeren aus Oxiranen und Comonomeren, durch anionische Polymerisation, **dadurch gekennzeichnet, dass** man in Gegenwart einer quartären Ammonium- und/oder Phosphoniumverbindung und eines einkernigen Aluminiumorganyls der Formel R₃-Al, wobei die Reste R unabhängig voneinander Wasserstoff, Halogen, C₁₋₂₀-Alkyl, C₆₋₂₀-Aryl oder C₇₋₂₀-Arylalkyl bedeuten, polymerisiert.

2. Verfahren nach Anspruch 1, **dadurch gekennzeichnet, dass** die Oxirane ausgewählt sind aus Propylenoxid, Ethylenoxid oder deren Mischungen.

3. Verfahren nach den Ansprüchen 1 bis 2, **dadurch gekennzeichnet, dass** die Comonomere ausgewählt sind aus Styrol, α-Methylstyrol, Butadien, Isopren oder deren Mischungen.

4. Verfahren nach den Ansprüchen 1 bis 3, **dadurch gekennzeichnet, dass** die quartäre Ammonium- oder Phosphoniumverbindung die Formel NR₄-X oder PR₄-X aufweisen, wobei R gleiches oder verschiedenes Alkyl mit 1 bis 10 C-Atomen, und X Halogen, OH oder ein Alkoholatrest mit 1 bis 10 C-Atomen, bedeuten.

5. Verfahren nach den Ansprüchen 1 bis 4, **dadurch gekennzeichnet, dass** als Aluminiumorganyl, Aluminiumtrialkyle verwendet werden.

6. Verfahren nach den Ansprüchen 1 bis 5, **dadurch gekennzeichnet, dass** das Molverhältnis von Aluminiumorganyl zu quartärer Ammonium- oder Phosphoniumverbindung, gerechnet als Aluminiumatome zu Stickstoff- oder Phosphoratomen, 1,5:1 bis 100:1 beträgt.

7. Verfahren nach den Ansprüchen 1 bis 6, **dadurch gekennzeichnet, dass** man zunächst die quartäre Ammonium- oder Phosphoniumverbindung und danach das Aluminiumorganyl zufügt.

8. Verfahren nach den Ansprüchen 1 bis 7, **dadurch gekennzeichnet, dass** es sich bei den Copolymeren um Blockcopolymere handelt, wobei durch sequentielle Polymerisation zunächst das Comonomer zu einem Polymerblock B polymerisiert wird, und danach das Oxiran zu einem Polyoxiranblock A polymerisiert wird.

9. Verfahren nach Anspruch 8, **dadurch gekennzeichnet, dass** bei der Polymerisation des Polymerblocks B eine Alkalimetallverbindung mitverwendet wird.

10. Verfahren nach den Ansprüchen 1 bis 9, **dadurch gekennzeichnet, dass** man in Gegenwart einer quartären Ammoniumverbindung und eines einkernigen Aluminiumorganyls polymerisiert.

## Claims

1. A process for preparation of homopolymers composed of oxiranes, or of copolymers composed of oxiranes and comonomers, via anionic polymerization, which comprises carrying out a polymerization in the presence of a quaternary ammonium and/or phosphonium compound and of a mononuclear organylaluminum compound of the formula R₃-Al, where the radicals R are, independently of one another, hydrogen, halogen, C₁₋₂₀-alkyl, C₆₋₂₀-aryl, or C₇₋₂₀-arylalkyl.

2. The process according to claim 1, wherein the oxiranes have been selected from propylene oxide, ethylene oxide, and mixtures of these.

3. The process according to claims 1 to 2, wherein the comonomers have been selected from styrene, α-methylstyrene, butadiene, isoprene, and mixtures of these.

4. The process according to claims 1 to 3, wherein the quaternary ammonium or phosphonium compound has the formula NR₄-X or PR₄-X, where R is identical or different alkyl having from 1 to 10 carbon atoms, and X is halogen, OH, or an alcoholate radical having from 1 to 10 carbon atoms.

5. The process according to claims 1 to 4, wherein trialkylaluminum compounds are used as organylaluminum compound.

6. The process according to claims 1 to 5, wherein the molar ratio of organylaluminum compound to quaternary ammonium or phosphonium compound, calculated as aluminum atoms to nitrogen atoms or phosphorus atoms, is from 1.5:1 to 100:1.

7. The process according to claims 1 to 6, wherein the quaternary ammonium or phosphonium compound is added first and then the organylaluminum compound is added.

8. The process according to claims 1 to 7, wherein the copolymers are block copolymers, and sequential polymerization is first used to polymerize the comonomer to give a polymer block B, and then the oxirane is polymerized to give a polyoxirane block A.

9. The process according to claim 8, wherein concomitant use is made of an alkali metal compound during the polymerization of the polymer block B.

10. The process according to claims 1 to 9, wherein polymerization is carried out in the presence of a quaternary ammonium compound and of a mononuclear organylaluminum compound.

## Revendications

1. Procédé de préparation d'homopolymères à base d'oxyrannes ou de copolymères à base d'oxyrannes et de comonomères, par polymérisation anionique, **caractérisé en ce qu'**on polymérise en présence d'un composé d'ammonium et/ou de phosphonium quaternaire et d'un aluminium-organyle mononucléaire de la formule R₃-Al, où les radicaux R représentent indépendamment l'un de l'autre, de l'hydrogène, de l'halogène ou un groupe alkyle en C₁-C₂₀, aryle en C₆-C₂₀ ou arylalkyle en C₇-C₂₀.

2. Procédé suivant la revendication 1, **caractérisé en ce que** les oxyrannes sont choisis parmi de l'oxyde de propylène, de l'oxyde d'éthylène ou leurs mélanges.

3. Procédé suivant les revendications 1 et 2, **caractérisé en ce que** les comonomères sont choisis parmi du styrène, de l'α-méthylstyrène, du butadiène, de l'isoprène ou leurs mélanges.

4. Procédé suivant les revendications 1 à 3, **caractérisé en ce que** le composé d'ammonium ou de phosphonium quaternaire présente la formule NR₄-X ou PR₄-X, où les R représentent un groupe alkyle identique ou différent comportant 1 à 10 atomes de C et X représente de l'halogène, OH ou un radical alcoolate comportant 1 à 10 atomes de C.

5. Procédé suivant les revendications 1 à 4, **caractérisé en ce que**, comme aluminium-organyle, on utilise des aluminium-trialkyles.

6. Procédé suivant les revendications 1 à 5, **caractérisé en ce que** le rapport molaire entre l'aluminium-organyle et le composé d'ammonium ou de phosphonium quaternaire, calculé sous la forme d'atomes d'aluminium par rapport aux atomes d'azote ou de phosphore, est de 1,5/1 à 100/1.

7. Procédé suivant les revendications 1 à 6, **caractérisé en ce qu'**on ajoute tout d'abord le composé d'ammonium ou de phosphonium quaternaire et ensuite l'aluminium-organyle.

8. Procédé suivant les revendications 1 à 7, **caractérisé en ce que**, pour ce qui concerne les copolymères, il s'agit de copolymères blocs, le comonomère étant, par polymérisation séquentielle, tout d'abord polymérisé en un bloc polymère B et ensuite l'oxyranne étant polymérisé en un bloc polyoxyranne A.

9. Procédé suivant la revendication 8, **caractérisé en ce que**, lors de la polymérisation du bloc polymère B, on utilise conjointement un composé de métal alcalin.

10. Procédé suivant les revendications 1 à 9, **caractérisé en ce qu'**on polymérise en présence d'un composé d'ammonium quaternaire et d'un aluminium-organyle mononucléaire.
